# EUROPEAN PATENT APPLICATION

(11) **EP 4 635 866 A1**
(43) Date of publication of application: **22.10.2025**
(21) Application number: 24382394.5
(22) Date of filing: 16.04.2024
(51) Int. Cl.: B65D 3/00, C08K 3/00

(54) **OCTAGONAL PLASTIC RIGID CONTAINER**

(71) Applicant: Coexpan Emsur Brasil Embalagens Ltda, 13212-161 Sao Paulo (BR)
(72) Inventor: TURCI, Walter, 13212-161 Sao Paulo (BR)
(74) Representative: Ungria López, Javier

(57) **Abstract**

The present invention relates to an octagonal plastic rigid container (1) comprising: a bottom part (2) in an octagonal shape; an upper part (3) in a circular shape; a side wall (4) which is tapered from the upper part towards the lower part; all of them are made of an extruded and thermoformed plastic flat sheet (6-6^{IV}) comprising a first polypropylene "PP" layer (7). Optionally, the sheet further comprises: adhesive layers (8), barrier layers (9), internal layers (11), and several polypropylene "PP" layers (7^{I} - 7^{VI}). The polypropylene layers comprise 40 to 100 weight percent of polypropylene "PP" and/or 2 to about 6 percent by weight of a color concentrate and/or about 5 to about 60 percent by weight of an inorganic reinforcing agent. The container is suitable to be used in packaging process involving some thermal process like the hot-filling, the pasteurization or the sterilization during the food packaging process.

## Description

### OBJECT OF THE INVENTION

The present invention relates to the technical field of containers for liquid, semiliquid, pastes or for liquid containing solid products, in different volumes. The invention is intended to, but not limited to, be used for packaging of tomato paste/sauces, preserved cooked vegetables or ready meals.

This invention refers to an innovative plastic rigid container, obtained in extrusion and thermoforming process, always with a combination of 8-sides bottom shape and round top shape.

### BACKGROUND OF THE INVENTION

Normally the process of putting tomato paste, or preserved cooked vegetables, or ready meals, in a packaging container, involves a thermal process to destroy or reduce the microbiological contamination, with the target to increase the shelf life of the packaged food.

Such thermal process can be hot filling (filling the container with the food heated at around 90-95°C); or pasteurization (heating at temperature from 63°C up to more than 90°C for different times) or the most critical process of sterilization, where the food is heated to 121° for 20 min (in this case, the temperature is achieved using water steam under pressure).

The choice of the process depends on the level of sensitivity to degradation of the food that need to be treated, as well as the desired shelf life. During these processes, the container needs to resist to a very strong thermal and mechanical stress.

Typically, for the product and process above mentioned, the container is a metal can, or a glass jar, that have the capacity to withstand the sterilization process (heating up to 121°C with water steam). In general, a plastic container cannot be used for such application because it would not resist to the sterilization condition without suffering a severe deformation, that will be not accepted by the market, or even could cause the packaging to open, with leakage of food.

However, the glass and metal have some disadvantages vs. a plastic container, and this is why a plastic-based solution has clear advantages.

First of all, the glass is brittle, so it cannot withstand to be hurt (or to fall from the shelf) without breaking. Also, both glass and metal containers require much more energy than plastic to be produced and shaped as container. Finally, all the containers are produced in a factory (glass, or metal, or plastic conversion factory) and then moved to the food packaging factory, where they are used. During the transport phase, the empty glass and metal container are not stackable one inside the other, so during their transport and storage there is a big waste of space. Empty metal cans and empty glass jars can be wrapped up but not stacked one inside the other. On the opposite side, plastic preformed containers are designed to be stacked in piles, so the transport and the storage are orders of magnitude much more efficient. The low energy required for manufacturing, the higher transport and logistic efficiency, and the lack of brittleness, make the plastic container a good solution for packaging foods.

In case of foods that need a sterilization process, however, the plastic container needs to be resistant to the thermal and mechanical stress as above described.

A solution based on plastic that is already on the market, is manufactured with the process of injection molding; with this process, the thickness of the wall is high enough to resist to the sterilization thermal choc. However, this technology has some disadvantages: usually, the injected container is made by polypropylene "PP" and it does not have any gas barrier properties. Thus, to achieve the desired shelf life of the food, an additional gas barrier layer (usually is a barrier sleeve) has to be added. This is expensive and require an additional process to be applied on the container. Also, the injected container usually has a higher thickness so a higher material consumption than the equivalent obtained in thermoforming.

### DESCRIPTION OF THE INVENTION

The present invention is an octagonal plastic rigid container obtained by extrusion and thermoforming process, with some important differences and advantages vs. the injected plastic containers of the state of the art:
- in general, lower weight and lower thickness (material saving);
- high barrier properties obtained through the multilayer coextrusion process, so avoiding the need to have an additional process to apply a barrier sleeve as in the injected container.

The octagonal plastic rigid container of the present invention is suitable to be used in packaging process involving some thermal process like the hot-filling, the pasteurization or the sterilization during the food packaging process.

The resistance to the sterilization process is achieved through the synergistic contribution of the following three factors:
- the octagonal bottom shape;
- the thickness; and,
- the formulation of the material.

These three factors participate to the functionality of the container, that must withstand without deformation the thermal process of hot filling, retort or pasteurization process of the contained food.

To achieve the above advantages and avoiding the aforementioned drawbacks, the present invention describes, an octagonal plastic rigid container comprising: a bottom part in an octagonal shape; an upper part in a circular shape; and, a side wall which is tapered from the upper part towards the lower part. The bottom part, the upper part and the side wall are made of an extruded and thermoformed plastic flat sheet comprising a first polypropylene "PP" layer, which comprises 40 to 100 weight percent of polypropylene "PP".

In one of the embodiments of the invention, the first polypropylene "PP" layer further comprises 2 to about 6 percent by weight of a color concentrate and/or about 5 to about 60 percent by weight of an inorganic reinforcing agent.

In one of the embodiments of the invention, the extruded and thermoformed plastic flat sheet comprises the first polypropylene "PP" layer, a second polypropylene "PP" layer in adhering contact with a bottom facial surface of the first polypropylene "PP" layer, and a third polypropylene "PP" layer in adhering contact with a bottom facial surface of the second polypropylene "PP" layer. The second and the third polypropylene "PP" layers comprises 40 to 100 weight percent of polypropylene "PP" and/or 2 to about 6 percent by weight of a color concentrate and/or about 5 to about 60 percent by weight of a inorganic reinforcing agent. The color of the first, second and third polypropylene "PP" layers could be the same or different one to each other.

In one of the embodiments of the invention, the extruded and thermoformed plastic flat sheet comprises the first polypropylene "PP" layer, a first adhesive layer in adhering contact with a bottom facial surface of the first polypropylene "PP" layer, a first barrier layer in adhering contact with a bottom facial surface of the first adhesive layer, a second adhesive layer in adhering contact with a bottom facial surface of the first barrier layer; and, a fourth polypropylene "PP" layer in adhering contact with a bottom facial surface of the second adhesive layer. The fourth polypropylene "PP" layer comprises 40 to 100 weight percent of polypropylene "PP" and/or 2 to about 6 percent by weight of a color concentrate and/or about 5 to about 60 percent by weight of an inorganic reinforcing agent.

In one of the embodiments of the invention, the extruded and thermoformed plastic flat sheet comprises the first polypropylene "PP" layer and further comprises a first internal layer comprising regrind material in adhering contact with a bottom facial surface of the first polypropylene "PP" layer, a third adhesive layer in adhering contact with a bottom facial surface of the first internal layer, a second barrier layer in adhering contact with a bottom facial surface of the third adhesive layer, a fourth adhesive layer in adhering contact with a bottom facial surface of the second barrier layer, a second internal layer comprising regrind material in adhering contact with a bottom facial surface of the fourth adhesive layer, and a fifth polypropylene "PP" layer in adhering contact with a bottom facial surface of the second internal layer The fifth polypropylene "PP" layer comprises 40 to 100 weight percent of polypropylene "PP" and/or 2 to about 6 percent by weight of a color concentrate and/or about 5 to about 60 percent by weight of an inorganic reinforcing agent. The color of the first and fifth polypropylene PP layers could be the same or different one to each other.

In one of the embodiments of the invention, the extruded and thermoformed plastic flat sheet comprises the first polypropylene "PP" layer and further comprises a third internal layer comprising regrind material in adhering contact with a bottom facial surface of the first polypropylene "PP" layer, a fifth adhesive layer in adhering contact with a bottom facial surface of the third internal layer, a third barrier layer in adhering contact with a bottom facial surface of the fifth adhesive layer, a sixth adhesive layer in adhering contact with a bottom facial surface of the third barrier layer, a sixth polypropylene "PP" layer in adhering contact with a bottom facial surface of the sixth adhesive layer, a seventh polypropylene "PP" layer in adhering contact with a bottom facial surface of the sixth polypropylene "PP" layer. The sixth and seventh polypropylene "PP" layers comprises 40 to 100 weight percent of polypropylene "PP" and/or 2 to about 6 percent by weight of a color concentrate and/or about 5 to about 60 percent by weight of an inorganic reinforcing agent. The color of the first, sixth and seventh polypropylene PP layers could be the same or different one to each other.

The polypropylene of the first to seventh polypropylene "PP" layers is selected from the group consisting of polypropylene homopolymer, polypropylene copolymer and blends with polypropylene and compatible polymers.

The color concentrate of the polypropylene "PP" layers is selected from the group consisting of color pigments, dyes dispersed in solvents, a polymer compatible with polypropylene and combinations thereof.

The inorganic reinforcing agent is selected from the group consisting of talc, calcium carbonate and combinations thereof.

The adhesive layers comprise adhesive material selected from the group consisting of a maleic anhydride grafted polypropylene adhesive, a functionalized polyethylene and a functionalized polypropylene.

Each one of the barrier layers is made of at least one of poly(ethylene vinyl alcohol) (EVOH), polyvinylalcohol (PVOH), polyvinylidene chloride (PVDC), polyamide, acrylate copolymers and cyclic olefin copolymers.

Each one of the barrier layers further comprises fillers selected from the group consisting of active/passive scavengers, nanofillers including talc, glass, clay, silica and mica.

According to a specific embodiment of the present invention, the extruded and thermoformed plastic flat sheet has a thickness between 0.8 mm and 3mm.

According to a specific embodiment of the present invention, the extruded and thermoformed plastic flat sheet has a total thickness between 0.8 mm and 3mm, and the % of the barrier layer is from 0 to 6% of the total thickness, the % of each layer of adhesive is from 0 to 6% of the total thickness, while the first and the second polypropylene layers have a total thickness from 82% to 100% of the total thickness.

According to a specific embodiment of the present invention, the octagonal plastic rigid container can be complemented with a label, or a sleeve, generally applied on the side wall. Alternatively, or additionally, the octagonal plastic rigid container can also be complemented with a flexible film closure on the top, and sometimes also with an additional rigid lid.

According to a specific embodiment of the present invention, the bottom part has a recessed surface with a heel radius for providing container stability during the filling process and final distribution.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:
- **Figure 1a****) y 1b)** represent a perspective view of one of the preferred embodiments of the octagonal plastic rigid container of the present invention.
- **Figure 2** represents a front view of the monolayer structure of the plastic flat sheet used for manufacturing the octagonal plastic rigid container.
- **Figure 3** represents a front view of the multi-layer structure of the plastic flat sheet used for manufacturing the octagonal plastic rigid container. The multi-layer structure having three layers.
- **Figure 4** represents a front view of the multi-layer structure of the plastic flat sheet used for manufacturing the octagonal plastic rigid container. The multi-layer structure having five layers.
- **Figure 5** represents a front view of the multi-layer structure of the plastic flat sheet used for manufacturing the octagonal plastic rigid container. The multi-layer structure having seven layers.
- **Figure 6** represents a front view of the multi-layer structure of the plastic flat sheet used for manufacturing the octagonal plastic rigid container. The multi-layer structure having seven layers.

### DESCRIPTION OF A PREFERRED EMBODIMENT OF THE INVENTION

Preferred embodiments of the present invention are described in detail below with the help of the accompanying figures.

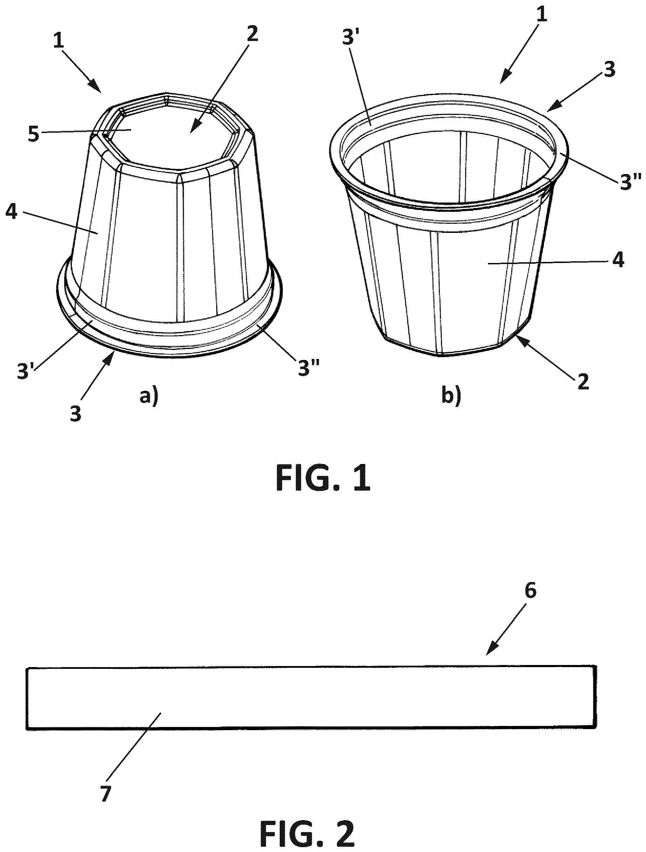

**Figure 1.a)** and **1.b)** shows the octagonal plastic rigid container according to the present invention. Specifically, **Figure 1.a)** shows the container upside down to illustrate the bottom part **2** of container. **Figure 1.b)** shows the container **1,** wherein the container **1** comprises the bottom part **2** in an octagonal shape, the upper part **3** in a circular shape and the side wall **4** which is tapered from the upper part **3** towards the lower part **2.**

The octagonal plastic rigid container **1** is obtained by extruding a plastic flat sheet **6, 6^{I}**, **6^{II},6^{III},6^{IV}** based on PP (polypropylene), and then thermoforming this sheet **6, 6^{I}**, **6^{II},6^{III},6^{IV}** to obtain the container **1.** The plastic sheet **6, 6', 6^{II},6^{III},6^{IV}** is obtained by extrusion. Usually, but not necessarily, is a coextruded multilayer structure **6, 6', 6^{II},6^{III},6^{IV}** in case gas barrier properties are needed. The base material is always composed by Polypropylene "PP". In case of gas barrier coextruded structure, there will be an additional internal layer of another polymer providing barrier, and another layer of polypropylene (PP/barrier/PP).

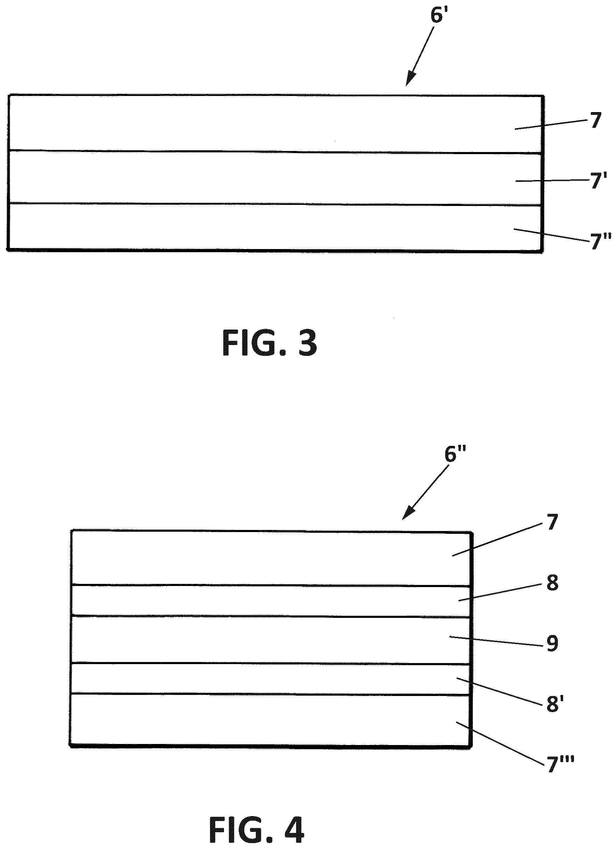

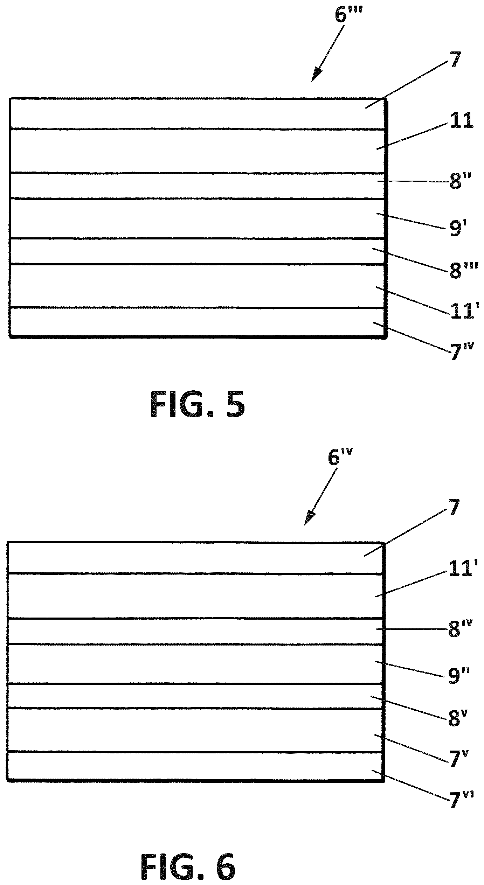

The structure of the plastic sheet can be a monolayer as shown in **Figure 2** or a multi-layer sheet structure as shown in **Figures 3** to **6**. If no barrier layer is needed, the multi-layer sheet structure may have two or three layers (Fig.3). However, if a barrier layer is needed, the multi-layer sheet structure should have at least five layers (Fig. 4), but could also include one or more additional layers (Figs. 5 and 6).

Specifically, Figure 3 shows the multi-layer sheet structure **6^{I}**, having the first polypropylene "PP" layer **7,** the second polypropylene "PP" layer **7^{I}** and the third polypropylene "PP" layer **7^{II}** located as shown in Figure 3. The first **7,** second **7^{I}** and third **7^{II}** polypropylene "PP" layers comprise 40 to 100 weight percent of polypropylene "PP". Optionally, each of the first **7,** second **7^{I}** and third **7^{II}** polypropylene "PP" layers may further comprise 2 to about 6 percent by weight of a color concentrate and/or about 5 to about 60 percent by weight of an inorganic reinforcing agent ("filler"). Thus, each polypropylene "PP" layer could have polypropylene "PP" composition only, PP+color, PP+filler or PP+color+filler. These combinations allow to have a bicolor octagonal plastic rigid container since the first and the third layers polypropylene "PP" may have different colors.

Another multi-layer sheet structure **6^{II}** is shown in Figure 4 in which a barrier layer is provided. Specifically, the multi-layer sheet structure **6^{II}** includes the first polypropylene "PP" layer **7,** the first adhesive layer **8** (also known as a "tie layer"), the first barrier layer **9,** the second adhesive layer **8^{I}** (also known as a "tie layer") and the fourth polypropylene "PP" layer **7^{III}**. The first **7** and the fourth **7^{III}** polypropylene "PP" layers comprise 40 to 100 weight percent of polypropylene "PP". Optionally, the first **7** and fourth **7^{III}** polypropylene "PP" layers may further comprise 2 to about 6 percent by weight of a color concentrate and/or about 5 to about 60 percent by weight of an inorganic reinforcing agent ("filler"). Thus, each polypropylene "PP" layer could have polypropylene "PP" composition only, PP+color, PP+filler or PP+color+filler. These combinations allow to have a bicolor octagonal plastic rigid container since the first and the fourth polypropylene "PP" layers may have different colors.

Another multi-layer sheet structure **6^{III}** is shown in Figure 5 in which a barrier layer is also provided. Specifically, the multi-layer sheet structure **6^{III}** includes the first polypropylene "PP" layer **7,** the first internal layer **11,** the third adhesive layer **8^{II}** (also known as a "tie layer"), the second barrier layer **9^{I}**, the fourth adhesive layer **8^{III}** (also known as a "tie layer"), the second internal layer **11^{I}** and the fifth polypropylene "PP" layer **7^{IV}**. The first **7** and the fifth **7^{IV}** polypropylene "PP" layers comprise 40 to 100 weight percent of polypropylene "PP". Optionally, the first **7** and fifth **7^{IV}** polypropylene "PP" layers may further comprise 2 to about 6 percent by weight of a color concentrate and/or about 5 to about 60 percent by weight of an inorganic reinforcing agent ("filler"). Thus, each polypropylene "PP" layer could have polypropylene "PP" composition only, PP+color, PP+filler or PP+color+filler. These combinations allow to have a bicolor octagonal plastic rigid container since the first and the fifth polypropylene "PP" layers may have different colors.

Another multi-layer sheet structure **6^{IV}** is shown in Figure 6 in which a barrier layer is also provided but now having three PP layers instead of two PP layers of the above-described embodiments. Specifically, the multi-layer sheet structure **6^{IV}** includes the first polypropylene "PP" layer **7,** the third internal layer **11^{II}**, the fifth adhesive layer **8^{IV}** (also known as a "tie layer"), the third barrier layer **9^{II}**, the sixth adhesive layer **8^{V}** (also known as a "tie layer"), the sixth polypropylene "PP" layer **7^{V}** and the seventh polypropylene "PP" layer **7^{VI}**. The first **7,** the sixth **7^{V}** and the seventh **7^{VI}** polypropylene "PP" layers comprise 40 to 100 weight percent of polypropylene "PP". Optionally, the first **7,** sixth **7^{V}** and seventh **7^{VI}** polypropylene "PP" layers may further comprise 2 to about 6 percent by weight of a color concentrate and/or about 5 to about 60 percent by weight of an inorganic reinforcing agent ("filler"). Thus, each polypropylene "PP" layer could have polypropylene "PP" composition only, PP+color, PP+filler or PP+color+filler. These combinations allow to have a bicolor octagonal plastic rigid container since the first and the fifth polypropylene "PP" layers may have different colors.

The polypropylene composition of each one of the polypropylene-based layers **7-7^{VI}**, can include a polypropylene homopolymer, polypropylene copolymer, and blends with polypropylene and compatible polymers.

The color concentrate may include color pigments and/or dyes dispersed in solvents and/or a polymer compatible with polypropylene.

Any suitable inorganic reinforcing agent may be used, for example, talc, calcium carbonate.

The adhesive layers **8^{I} 8^{II} 8^{III} 8^{IV} 8^{V} 8^{VI}** are defined as tie or adhesive layers formed of an adhesive material. The adhesive material is used to bond a polypropylene-based layer to a barrier layer. Suitable adhesive material that may be used include, but not limited to, a maleic anhydride grafted polypropylene adhesive, a functionalized polyethylene, a functionalized polypropylene, for example, a copolymer with polypropylene, polyamide, blends of polyethylene, and polypropylene containing active groups capable of reacting with the material of the barrier layer.

The barrier layers **8^{I},8^{II}, 8^{III}** are formed by at least one of poly(ethylene vinyl alcohol) (EVOH), polyvinylalcohol (PVOH), polyvinylidene chloride (PVDC), polyamide, acrylate copolymers, cyclic olefin copolymers, and the like. The barrier layers **8^{I},8^{II}**, **8^{III}** may also include fillers, for example, active/passive scavengers, nanofillers including talc, glass, clay, silica, mica, and the like.

The monolayer 6 or multi-layer structure **6^{I}**, **6^{II},6^{III},6^{IV}** has a thickness about 0.8 mm (millimeter) to about 3mm. In the case of the multilayer structure, the % of the barrier layer is from 0 to 6% of the total thickness, the % of each layer of adhesive is from 0 to 6% of the total thickness, while the polypropylene-based layers have a total thickness from 82% to 100% of the total thickness. It must be noted that the composition of each one of the polypropylene-based layers **7, 7^{I}**, **7^{II}**, **7^{III}**, **7^{IV}**, **7^{V}**, **7^{VI}** could be equal or different, as described above.

The bottom part **2** of the container **1** is based on a polygonal shape with middle tension arc, and the same polygonal pattern continue on the tapered side wall **4** of the container **1,** as part of the functional characteristic of the container **1.**

The upper part **3** of the container **1** has a round shape, to facilitate its use on standard filling and sealing machine. Thus, on the side wall **4** of the container there is a transition from round shape of the upper part **3** to the polygonal shape of the bottom part **2.**

The bottom part **2** has a recessed surface **5** with a heel radius for providing container stability during the filling process and final distribution.

On the top of the container **1** there is a top flange **3"** having a flat edge which facilitates the sealing of the container with a lidding top film, in case this is used. The top flange **3"** also helps the clipping of a rigid secondary lid, in case this is used.

There is continuous lateral protrusion **3'** with a negative angle close to the top flange **3"** of the container **1** which facilitates de-stacking the container **1** and also for holding the position while being taken out of the thermoforming tool before the automatic stacking process.

The container **1** is intended to be closed by sealing a flexible lidding film on the top flange **3"** of the container. Normally the sealing is thermal (welding), but it could be also by ultrasound or high frequency.

The present invention should not be limited by the embodiment herein described. Other arrangements may be carried out by those skilled in the art based on the present description. Accordingly, the scope of the invention is defined by the following claims.

## Claims

1. An octagonal plastic rigid container (1) comprising:
• a bottom part (2) in an octagonal shape;
• an upper part (3) in a circular shape;
• a side wall (4) which is tapered from the upper part (3) towards the lower part (2);
wherein the bottom part (2), the upper part (3) and the side wall (4) are made of an extruded and thermoformed plastic flat sheet (6, 6^{I}, 6^{II}6^{III},6^{IV}) comprising a first polypropylene "PP" layer (7), which comprises 40 to 100 weight percent of polypropylene "PP".

2. The octagonal plastic rigid container (1) of claim 1, wherein the first polypropylene "PP" layer (7) further comprises 2 to about 6 percent by weight of a color concentrate and/or about 5 to about 60 percent by weight of an inorganic reinforcing agent.

3. The octagonal plastic rigid container (1) of claim 1 or 2, wherein the extruded and thermoformed plastic flat sheet (6^{I}) further comprises a second polypropylene "PP" layer (7^{I}) in adhering contact with a bottom facial surface of the first polypropylene "PP" layer (7), and a third polypropylene "PP" layer (7^{II}) in adhering contact with a bottom facial surface of the second polypropylene "PP" layer (7'); wherein the second (7^{I}) and the third (7^{II}) polypropylene "PP" layers comprises 40 to 100 weight percent of polypropylene "PP" and/or 2 to about 6 percent by weight of a color concentrate and/or about 5 to about 60 percent by weight of a inorganic reinforcing agent.

4. The octagonal plastic rigid container (1) of claim 1 or 2, wherein the extruded and thermoformed plastic flat sheet (6^{II}) further comprises:
• a first adhesive layer (8) in adhering contact with a bottom facial surface of the first polypropylene "PP" layer (7);
• a first barrier layer (9) in adhering contact with a bottom facial surface of the first adhesive layer (8);
• a second adhesive layer (8^{I}) in adhering contact with a bottom facial surface of the first barrier layer (9); and,
• a fourth polypropylene "PP" layer (7^{III}) in adhering contact with a bottom facial surface of the second adhesive layer (8'); the fourth polypropylene "PP" layer (7^{III}) comprises 40 to 100 weight percent of polypropylene "PP" and/or 2 to about 6 percent by weight of a color concentrate and/or about 5 to about 60 percent by weight of an inorganic reinforcing agent.

5. The octagonal plastic rigid container (1) of claim 1 or 2, wherein the extruded and thermoformed plastic flat sheet (6^{III}) further comprises:
• a first internal layer (11) comprising regrind material in adhering contact with a bottom facial surface of the first polypropylene "PP" layer (7);
• a third adhesive layer (8^{II}) in adhering contact with a bottom facial surface of the first internal layer (11);
• a second barrier layer (9') in adhering contact with a bottom facial surface of the third adhesive layer (8^{II});
• a fourth adhesive layer (8^{III}) in adhering contact with a bottom facial surface of the second barrier layer (9^{I});
• a second internal layer (11^{I}) comprising regrind material in adhering contact with a bottom facial surface of the fourth adhesive layer (8^{III});
• a fifth polypropylene "PP" layer (7^{IV}) in adhering contact with a bottom facial surface of the second internal layer (11^{I}); the fifth polypropylene "PP" layer (7^{IV}) comprises 40 to 100 weight percent of polypropylene "PP" and/or 2 to about 6 percent by weight of a color concentrate and/or about 5 to about 60 percent by weight of an inorganic reinforcing agent.

6. The octagonal plastic rigid container (1) of claim 1 or 2, wherein the extruded and thermoformed plastic flat sheet (6^{IV}) further comprises:
• a third internal layer (11^{II}) comprising regrind material in adhering contact with a bottom facial surface of the first polypropylene "PP" layer (7);
• a fifth adhesive layer (8^{IV}) in adhering contact with a bottom facial surface of the third internal layer (11^{II});
• a third barrier layer (9^{II}) in adhering contact with a bottom facial surface of the fifth adhesive layer (8^{IV});
• a sixth adhesive layer (8^{V}) in adhering contact with a bottom facial surface of the third barrier layer (9^{II});
• a sixth polypropylene "PP" layer (7^{V}) in adhering contact with a bottom facial surface of the sixth adhesive layer (8^{V});
• a seventh polypropylene "PP" layer (7^{VI}) in adhering contact with a bottom facial surface of the sixth polypropylene "PP" layer (7^{V});
the sixth and seventh polypropylene "PP" layers comprises 40 to 100 weight percent of polypropylene "PP" and/or 2 to about 6 percent by weight of a color concentrate and/or about 5 to about 60 percent by weight of an inorganic reinforcing agent.

7. The octagonal plastic rigid container (1) of any of claims 1-6, wherein the polypropylene "PP" is selected from the group consisting of polypropylene homopolymer, polypropylene copolymer and blends with polypropylene and compatible polymers.

8. The octagonal plastic rigid container (1) of any of claims 1-6, wherein the color concentrate is selected from the group consisting of color pigments, dyes dispersed in solvents, a polymer compatible with polypropylene and combinations thereof.

9. The octagonal plastic rigid container (1) of any of claims 1-6, wherein the inorganic reinforcing agent is selected from the group consisting of talc, calcium carbonate and combinations thereof.

10. The octagonal plastic rigid container (1) of any of claims 1-6, wherein each one of the adhesive layers (8^{I}, 8^{II},8^{III},8^{IV},8^{V}) comprises adhesive material selected from the group consisting of a maleic anhydride grafted polypropylene adhesive, a functionalized polyethylene and a functionalized polypropylene.

11. The octagonal plastic rigid container (1) of any of claims 1-6, wherein each one of the barrier layers (9,9^{I},9^{II}) is made of at least one of poly-[ethylene vinyl alcohol] "EVOH", polyvinylalcohol "PVOH", polyvinylidene chloride "PVDC", polyamide, acrylate copolymers and cyclic olefin copolymers.

12. The octagonal plastic rigid container (1) of claim 11, wherein each one of the barrier layers (9,9^{I},9^{II}) further comprises fillers selected from the group consisting of active/passive scavengers, nanofillers including talc, glass, clay, silica and mica.

13. The octagonal plastic rigid container (1) of any of claims 1-6, wherein the extruded and thermoformed plastic flat sheet (6^{I}, 6^{II}, 6^{III}, 6^{IV}) has a thickness between 0.8 mm and 3mm.

14. The octagonal plastic rigid container (1) of any of claims 1-6, wherein the extruded and thermoformed plastic flat sheet (6^{I}, 6^{II}, 6^{III}, 6^{IV}) has a total thickness between 0.8 mm and 3mm, and the % of each layer (9^{I}, 9^{II}, 9^{III}) of the barrier layers is from 0 to 6% of the total thickness, the % of each layer (8^{I}, 8^{II}, 8^{III}, 8^{IV},8^{V}) of adhesive layers is from 0 to 6% of the total thickness, while the polypropylene layers (7^{I}, 7^{II}, 7^{III}, 7^{IV},7^{V}, 7^{VI}) have a total thickness from 82% to 100% of the total thickness.

15. The octagonal plastic rigid container (1) of claim 1, wherein the bottom part has a recessed surface (5) with a heel radius for providing container stability during the filling process and final distribution.
